# EUROPÄISCHE PATENTSCHRIFT

(11) **EP 0 828 351 B1**
(45) Veröffentlichungstag und Bekanntmachung des Hinweises auf die Patenterteilung: **28.04.2004**
(21) Anmeldenummer: 97110745.3
(22) Anmeldetag: 01.07.1997
(51) Int. Cl.: H04B 7/08, H04N 5/44

(54) **Raumdiversity-Verfahren**
Multiantenna diversity method
Procédé de diversité multi-antennes

(30) Priorität: 06.09.1996 DE 19636125
(43) Veröffentlichungstag der Anmeldung: 11.03.1998
(73) Patentinhaber: FUBA Automotive GmbH & Co. KG, 31162 Bad Salzdetfurth (DE)
(72) Erfinder: Rudolph, Georg, 30926 Seelze (DE)

(56) Entgegenhaltungen:
- DE-A- 4 006 295
- DE-A- 4 101 629
- DE-A- 4 119 398
- US-A- 5 335 010
- PATENT ABSTRACTS OF JAPAN vol. 1995, no. 09, 31. Oktober 1995 (1995-10-31) & JP 07 162775 A (CASIO COMPUT CO LTD), 23. Juni 1995 (1995-06-23)

## Beschreibung

Die Erfindung betrifft ein Raumdiversity-Verfahren für den mobilen Empfang von HF-Signalen in unterschiedlichen, durch Lücken getrennten Frequenzbereichen, insbesondere für den mobilen Fernsehempfang in bewegten Kraftfahrzeugen, mit den im Oberbegriff des Hauptanspruchs angegebenen Gattungsmerkmalen.

Diversity-Verfahren und -Schaltungen mit Mehrantennen-Anordnungen für den möglichst störungsfreien Empfang von Fernsehsendungen im bewegten Fahrzeug sind bekannt.
Bekannt ist auch die getrennte Optimierung der Bild- und der Tonsignale über je eine separate Diversity-Baugruppe. Als ein Beispiel für den Stand der Technik auf diesem Gebiet wird hier die deutsche Patentanmeldung DE 41 01 629 A angeführt: Mehrere, z.B. vier Antennen sind über eine Gabelschaltung mit zwei Antennenumschaltern verbunden, von denen der eine von einer Diversity-Schaltung für die Bildsignale und der andere von einer Diversity-Schaltung für die Tonsignale gesteuert wird. So wird bestmögliche Qualität gleichzeitig der amplitudenmodulierten Bildsignale und der frequenzmodulierten Tonsignale mit einem, relativ gesehen, geringen Aufwand - z.B. in bezug auf die Zahl der Antennen - erzielt.

Eine in qualitativer Hinsicht adäquate Ergänzung erfährt dieses Prinzip durch die Erfindung nach der deutschen Patentanmeldung DE 39 26 336 A, mit der die Video-Empfangssignale im Zeilentakt - jeweils innerhalb des Horizontal-Synchronimpulses - detektiert werden können. Im gleichen Rhythmus kann zwischen den Antennen umgeschaltet werden, und es kann zeilenweise das jeweils günstigste Signal zum Empfänger durchgestellt werden.

Der schnelle Antennenwechsel, mit dem der vorteilhafte Effekt der Verbesserung und Stabilisierung des Bildempfangs erzielt wird, ist jedoch auch mit einem Problem verbunden: Die Antenne, auf die der Signalweg umgeschaltet wird, liefert - entsprechend dem Auswahlkriterium - einen höheren Pegel als die vorher benutzte. Zu der Differenz zwischen den Pegelwerten kommt in aller Regel noch eine unterschiedliche Phasenlage. Die automatische Verstärkungsregelung (AGC) des Empfängers kann sich jedoch nicht verzögerungsfrei auf den geänderten Pegel einstellen, und auch die Filter und die Demodulatorschwingkreise benötigen eine gewisse Zeit, um sich auf die neue Phasenlage einzuregeln. Das führt dazu, daß die erste Zeile nach dem Durchschalten der neuen Antenne gestört sein kann. Auch die folgenden Zeilen zeigen oft einen Helligkeitsverlauf, bis sich die AGC dem neuen Pegelwert angepaßt hat. Die Wiedergabequalität wird durch die Diversityfunktion beeinträchtigt.

Der Erfindung liegt deshalb die Aufgabe zugrunde, mit ergänzenden schaltungstechnischen Verfahrensschritten und den entsprechenden Komponenten im Bilddiversity-Teil eine gleichbleibend hohe Bildqualität auch bei Pegel- und Phasensprüngen im Video-Empfangssignal, wie sie im Augenblick des Antennenwechsels auftreten, zu gewährleisten.

Diese Aufgabe wird erfindungsgemäß mit Hilfe der im kennzeichnenden Teil des Hauptanspruchs angegebenen Merkmale gelöst. Die Unteransprüche enthalten bevorzugte Ausführungsvarianten und -details.

Mit der Erfindung gelingt es, die Bildwiedergabe in hohem Maß frei von den mit der Funktion der Diversity-Schaltung verbundenen bzw. dabei nicht immer zu unterdrückenden Störungen zu halten und beim Umschalten von einer aktuellen Antenne niedrigeren Empfangspegels auf eine besser positionierte mit höherem Pegel einen nahtlosen Übergang des Bildsignals zu sichern.
Der Umstand, daß immer dann, wenn die erfindungsgemäßen zusätzlichen Speicherbausteine arbeiten, ein Zeileninhalt oder etwa der Inhalt zweier Zeilen entweder komplett oder in bestimmten Signal-Anteilen auf dem Bildschirm wiederholt wird, stellt dabei keine Beeinträchtigung dar, denn nach aller Erfahrung unterscheiden sich die unmittelbar aufeinanderfolgenden Zeilen nur unwesentlich voneinander. Parallel dazu beschleunigt die erfindungsgemäße Komparatorschaltung mit Vergleich der alten und der neuen Signale die Angleichung der automatischen Verstärkungsregelung des Empfängers an die neuen Pegel- und Phasenwerte, so daß der Wiederholungsmodus von der erfindungsgemäßen Anordnung auch selbst zeitmäßig eingegrenzt wird.

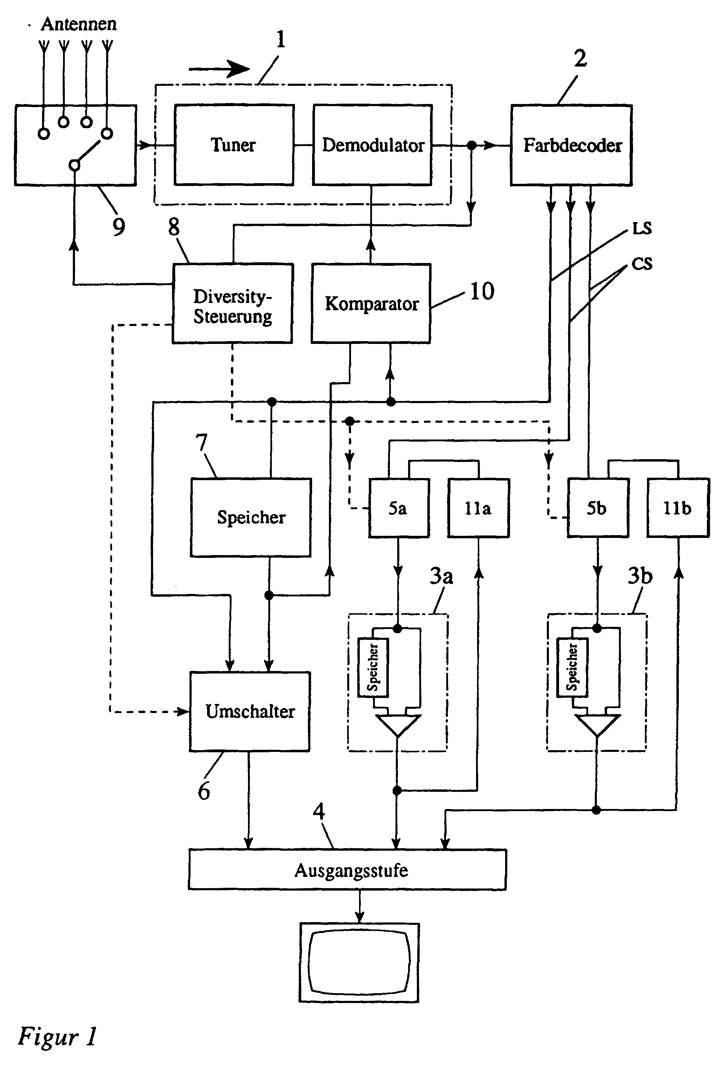

Die Erfindung wird im folgenden an Hand eines Ausführungsbeispiels näher erläutert. In der zugehörigen Zeichnung zeigt
- Figur 1:: Bild-Diversityteil für das erfindungsgemäße Verfahren bei einem PAL-Gerät mit Mehrantennenenanordnung

Das vom Empfänger 1 gelieferte Bildsignal wird bei PAL im Farbdecoder 2 nach den drei Anteilen - ein Luminanzsignal und zwei Farbdifferenzsignale - decodiert.
Die Farbdifferenzsignale werden in den Speicherbausteinen 3a und 3b für die Dauer einer Zeile gespeichert. Die um eine Zeile verzögerten Signalanteile werden dann mit den entsprechenden Anteilen des unverzögerten Signals überlagert. Die auf diese Weise gewonnenen Ausgangs-Farbdifferenzsignale werden zusammen mit dem bei PAL ohne Verzögerung weitergeleiteten Luminanzsignal zur Ausgangsstufe 4 geführt.

Die bekannte PAL-Schaltung wird gemäß der Erfindung um folgende Baugruppen und Funktionen ergänzt: Den Eingängen der Speicher 3a, 3b für die Farbdifferenzsignale wird je ein Signalquellenumschalter 5a, 5b vorgeschaltet, und in den Weg des Luminanzsignals werden der zusätzliche Speicher 7 und der Umschalter 6 eingebunden.

Die Wirkungsweise ist folgende: Solange die Diversity-Steuerung 8 keinen Antennenwechsel veranlaßt, wird den Speicherbausteinen 3a, 3b das Farbdifferenzsignal aus dem Farbdecoder 2 direkt zugeführt, und das Luminanzsignal wird ohne Verzögerung über den Umschalter 6 geführt.
Wenn dagegen ein Antennenwechsel stattfindet, wird der betreffenden Zeile noch das in 3a und 3b gespeicherte Farbdifferenzsignal aufsummiert. Außerdem wird an Stelle des Luminanzsignals ohne Verzögerung ein im Depot 7 gespeichertes Luminanzsignal mit einer Verzögerung um eine Zeile zur Ausgangsstufe gegeben.

Bei Geräten mit Empfang von Signalen nach der NTSC-Norm ist eine Zeilenverzögerung, wie sie bei PAL angewendet wird (über die bekannte Speicherung der Farbdifferenzsignale) nicht erforderlich. Sie ist jedoch geeignet, bei NTSC die Bildwiedergabe zu verbessern. Das gilt insbesondere bei Verwendung einer Schaltung gemäß der vorliegenden Erfindung.

Bei Empfang nach der SECAM-Farbnorm gibt der Farbdecoder die Farbdifferenzsignale alternierend aus, und jedes weitergegebene Signal wird in die Speicher 3a bzw. 3b eingelesen und gleichzeitig weitergeleitet; immer dann, wenn zu dem Speicher gerade kein neues Signal gelangt, wird das zuletzt gespeicherte Signal ein zweites Mal ausgegeben. Auch hier ist wie beim PAL-System eine Ergänzung durch erfindungsgemäße zusätzliche Speicherschritte vorteilhaft.
Dabei werden z.B. die Signalumschalter 5a und 5b dazu verwendet, in den Zeilen, in denen ein Antennenwechsel stattfindet, das verzögerte Signal - ggf. über eine Pegelanpassungsschaltung 11a, 11b - oder den Nullpegel wieder den Speicherbausteinen 3a und 3b zuzuführen, je nachdem, ob in der Zeile das Farbdifferenzsignal übertragen wird oder nicht.

Die Schalter 5a, 5b, 6 werden von der Antennendiversity-Steuerschaltung derart angesteuert, daß jeweils in der Zeile, in der mittels Antennenumschalter 9 auf eine andere Antenne umgeschaltet wurde, die Signalquellenschalter auf das verzögerte, d.h. das zuletzt empfangene Signal umschalten.

Der Komparator 10 vergleicht das verzögerte Signal mit dem neu empfangenen und steuert den Empfänger 2 so, daß bei Antennenwechsel in jedem Fall ein nahtloser Übergang ohne Helligkeitssprung gewährleistet ist.

## Patentansprüche

1. Raumdiversity-Verfahren für den mobilen Empfang von HF-Signalen in unterschiedlichen, durch Lücken getrennten Frequenzbereichen, insbesondere für den mobilen Fernsehempfang, wobei für das Videosignal und für das Audiosignal je eine separate Diversity-Schaltung zum Prüfen der von den Antennen empfangenen Signale und zum Durchschalten der Antenne mit der jeweils besten Signalqualität vorhanden ist und wobei Prüfung und Umschalten vorzugsweise zeilenweise und vorzugsweise innerhalb der Austastlücke für die Horizontal-Synchronisation erfolgen, **gekennzeichnet durch** die folgenden Merkmale:
- In der Bild-Diversityschaltung sind zusätzliche Speicher (3a, 3b) für das Bildsignal oder für Bildsignal-Anteile mit einer Kapazität von jeweils mindestens einer Zeile angeordnet, in die entweder kontinuierlich zeilenweise das komplette Empfangssignal oder die entsprechenden Anteile eingelesen werden, oder es wird zumindest jeweils das unmittelbar vor einem bevorstehenden Umschaltvorgang empfangene Signal einer Zeile gespeichert.
- Das Signal der letzten Zeile oder mehrere vorher empfangene Zeilensignale werden nach Durchschalten der neuen Antenne aus dem jeweiligen Speicher (3a, 3b) ausgelesen und an Stelle des Empfangssignals der neuen Antenne zunächst weiter zur Ausgangsstufe (4) gegeben, wobei die Signale oder Signalanteile aus dem oder den Speichern (3a, 3b) vorzugsweise gleichzeitig in einem Komparator (10) mit den neuen Antennensignalen oder den entsprechenden Anteilen verglichen werden, und wobei aus der Pegeldifferenz der Signale ein Steuerungsimpuls abgeleitet wird, mit dem in der automatischen Verstärkungsregelung des Empfängers eine schnellere Anpassung des Signalpegels der neu durchgeschalteten Antenne an den der vorher aktuellen Antenne bewirkt wird.

2. Raumdiversity-Verfahren nach Anspruch 1, **dadurch gekennzeichnet, daß** in einem zusätzlich vor dem Decoder (2) zur Farbdekodierung angeordneten Bildzeilenspeicher die Zeileninformation in Gestalt des kompletten Videosignals gespeichert wird.

3. Raumdiversity-Verfahren nach Anspruch 1, **dadurch gekennzeichnet, daß** bei Anwendung beim PAL-System zusätzlich zu den in bekannter Weise in den Speicherbausteinen (3 a) und (3b) zeilenweise gespeicherten Farbdifferenzsignalen in einen parallel zu diesen Bausteinen geschalteten Speicher (7) das Luminanzsignal eingelesen wird, und daß beim NTSC-System die kombinierte Speicherung der Farbdifferenzsignale und des Luminenzsignals zur Bildverbesserung angewendet wird.

4. Raumdiversity-Verfahren nach Anspruch 1, **dadurch gekennzeichnet, daß** die zeilenweise Speicherung und Ausgabeverzögerung in einem Speicherbaustein am Ende der Ausgangsstufe (4) erfolgt, indem die Einzelkomponenten Rot, Grün und Blau des Empfangssignals gespeichert und zur Korrektur der Pegel- und Phasensprünge benutzt werden.

5. Raumdiversity-Verfahren nach Anspruch 1, **gekennzeichnet durch** eine Komparator-Schaltung (10) die einen Zeilenvergleich mit einer eingestellten Verzögerung vornimmt, die das Einschwingen der Filter und Schwingkreise berücksichtigt.

## Claims

1. Spatial diversity process for the mobile reception of HF signals in different frequency ranges separated by intervals, particularly for mobile television reception, wherein the video signal and the audio signal each have a separate diversity circuit for testing the signals received by the antennas and for switching to the antenna with the best signal quality at the time, the testing and switching preferably being carried out line by line and preferably within the blanking interval for the horizontal synchronisation, **characterised by** the following features:
- in the image diversity circuit, additional memories (3a, 3b) for the image signal or for image signal components with a capacity of at least one line are provided, into which either the complete reception signal or the corresponding components are read in continuously, line by line, or at least the signal of a line received immediately before an impending switching process is stored;
- the signal of the last line or several line signals received previously are read out from the respective memory (3a, 3b) after the new antenna has been switched through, and are initially passed on to the output stage (4) instead of the reception signal from the new antenna, the signals or signal components from the memory or memories (3a, 3b) preferably being compared simultaneously in a comparator (10) with the new antenna signals or the corresponding components, a control impulse being derived from the difference in levels of the signals, by means of which, in the automatic gain control of the receiver, the signal level of the antenna newly switched through is adapted more quickly to that of the antenna which was previously in use.

2. Spatial diversity process according to claim 1, **characterised in that** the line information is stored in the form of the complete video signal in a display line memory additionally arranged in front of the decoder (2) for colour decoding.

3. Spatial diversity process according to claim 1, **characterised in that**, when using the PAL system, in addition to the colour difference signals stored line by line in known manner in the memory chips (3a) and (3b) the luminance signal is read into a memory (7) connected in parallel to these chips, and **in that** in the NTSC system the combined storage of the colour difference signals and the luminance signal is used to improve the image.

4. Spatial diversity process according to claim 1, **characterised in that** the line-by-line storage and output delay takes place in a memory chip at the end of the output stage (4), by storing the individual red, green and blue components of the reception signal and using them to correct the level and phase shifts.

5. Spatial diversity process according to claim 1, **characterised by** a comparator circuit (10) which carries out line comparison with a set delay, which takes account of the transient effects of the filters and oscillating circuits.

## Revendications

1. Procédé de diversité spatiale pour la réception mobile de signaux HF dans des plages de fréquence différentes séparées par des solutions de continuité, en particulier pour la réception mobile de la télévision, dans lequel un circuit de diversité séparé est prévu pour le signal vidéo et pour le signal audio afin de contrôler les signaux captés par les antennes et de commuter sur l'antenne ayant la meilleure qualité de signal, et dans lequel le contrôle et la commutation s'effectuent de préférence ligne par ligne et de préférence pendant l'intervalle de suppression de la synchronisation horizontale, **caractérisé en ce que** :
- le circuit de diversité d'image contient des mémoires supplémentaires (3a, 3b) pour le signal d'image ou pour des parties du signal d'image, d'une capacité d'une ligne au moins chacune, dans lesquelles le signal de réception complet ou les fractions correspondantes sont écrits en continu ligne par ligne, ou bien au moins le signal d'une ligne capté immédiatement avant une commutation imminente est mémorisé ;
- le signal de la dernière ligne ou plusieurs signaux de ligne captés précédemment sont lus après la commutation sur la nouvelle antenne à partir de la mémoire (3a, 3b) correspondante et transmis d'abord à l'étage de sortie (4) à la place du signal de réception de la nouvelle antenne, les signaux ou parties de signal issus de la ou des mémoires (3a, 3b) étant de préférence comparés simultanément dans un comparateur (10) avec les nouveaux signaux d'antenne ou les parties de signal correspondantes, et une impulsion de commande étant dérivée de la différence de niveau des signaux laquelle impulsion de commande permet d'obtenir, dans la régulation automatique de l'amplification du récepteur, une adaptation plus rapide du niveau de signal de la nouvelle antenne activée à celui de l'antenne précédemment activée.

2. Procédé de diversité spatiale selon la revendication 1, **caractérisé en ce que** l'information de ligne est mémorisée sous la forme du signal vidéo complet dans une mémoire de lignes d'image ajoutée en amont du décodeur (2) pour le décodage des couleurs.

3. Procédé de diversité spatiale selon la revendication 1, **caractérisé en ce que** lorsqu'il est utilisé avec le système PAL, en complément des signaux de différence de couleur enregistrés ligne par ligne de manière connue dans les composants de mémoire (3a et 3b), le signal de luminance est écrit dans une mémoire (7) montée en parallèle avec ces composants, et **en ce qu'**avec le système NTSC, la mémorisation combinée des signaux de différence de couleur et du signal de luminance est utilisée pour l'amélioration de l'image.

4. Procédé de diversité spatiale selon la revendication 1, **caractérisé en ce que** la mémorisation ligne par ligne et la temporisation de sortie ont lieu dans un composant de mémoire à la fin de l'étage de sortie (4) par la mémorisation des composantes rouge, verte et bleue du signal de réception et leur utilisation pour la correction des sauts de niveau et de phase.

5. Procédé de diversité spatiale selon la revendication 1, **caractérisé en ce qu'**il comporte un circuit comparateur (10) qui compare les lignes avec une temporisation réglée tenant compte de la réponse transitoire des filtres et des circuits oscillants.
